# EUROPÄISCHE PATENTANMELDUNG

(11) **EP 1 604 789 A2**
(43) Veröffentlichungstag der Anmeldung: **14.12.2005**
(21) Anmeldenummer: 05011665.6
(22) Anmeldetag: 31.05.2005
(51) Int. Cl.: B25J 9/16

(54) **Verfahren und Vorrichtung zum Verbessern der Positioniergenauigkeit eines Handhabungsgeräts**

(30) Priorität: 02.06.2004 DE 102004026814
(71) Anmelder: KUKA Roboter GmbH, 86165 Augsburg (DE)
(72) Erfinder: Bischoff, Rainer, 86163 Augsburg (DE)
(74) Vertreter: Lempert, Jost

(57) **Zusammenfassung**

Vorgeschlagen wird ein Verfahren zum Verbessern der Positioniergenauigkeit eines Handhabungsgeräts, wie eines Mehrachs-Industrieroboters (1), durch Erstellung wenigstens eines absolutgenauen Modells des Handhabungsgeräts zur Steuerung desselben. Erfindungsgemäß wird zum Erstellen des absolutgenauen Modells zunächst eine Pose (P1) des Handhabungsgeräts durch ein externes Messsystem (2) bestimmt, anschließend werden Abweichungen (Δ) der bestimmten Pose von einer vorgegebenen Pose (P2) ermittelt, dann wird das Handhabungsgerät nach Maßgabe des externen Messsystems (2) zur Minimierung der Abweichungen (Δ) in eine im Wesentlichen der vorgegebenen Pose (2) entsprechende Endpose verfahren, und schließlich werden interne Stellungswerte des Handhabungsgeräts in der Endpose für eine Parametrisierung des absolutgenauen Modells verwendet. Auf diese Weise verbessert die Erfindung das absolutgenaue Vermessen von Robotern insbesondere im Hinblick auf die Genauigkeit und ermöglicht so insbesondere das Austauschen eines beliebigen, absolutgenauen Roboters in einer Arbeitszelle durch einen anderen derartigen Roboter.

## Beschreibung

Die Erfindung betrifft ein Verfahren zum Verbessern der Positioniergenauigkeit eines Handhabungsgeräts, wie eines Mehrachs-Industrieroboters, wobei eine Pose des Handhabungsgeräts durch ein externes Messsystem bestimmt wird und Abweichungen der bestimmten Pose von einer vorgegebenen Pose ermittelt werden. Weiterhin betrifft die Erfindung eine Vorrichtung zum Bestimmen eines Steuerungsmodells für ein Handhabungsgerät, wie einen Mehrachs-Industrieroboter, mit einem externen Messsystem zum Bestimmen wenigstens eines Freiheitsgrads einer Pose des Handhabungsgeräts und mit Vergleichsmitteln zum Ermitteln von Abweichungen zwischen der bestimmten Pose und der vorgegebenen Pose.

Um die Positioniergenauigkeit von Handhabungsgeräten, insbesondere von Mehrachs-Industrierobotern, zu verbessern, gingen in der Vergangenheit Bestrebungen dahin, immer genauere Modelle der Handhabungsgeräte zu erstellen. Die Parameter derartiger Modelle werden dabei im Zuge eines Einmessvorgangs bestimmt, der typischerweise einmalig beim Hersteller des Handhabungsgeräts durchgeführt wird. Typischerweise wird hierbei an einem Handflansch des Roboters ein Hilfsmittel befestigt, das ein genaues Bestimmen der Lage, d.h. einer Position und Orientierung, üblicherweise und auch im Folgenden als "Pose" bezeichnet, des Flansches im Raum ermöglicht. Beispielsweise kommen Referenzplatten mit bekannten, von einem Kamera- oder Laser-Tracking-System erfassbaren Merkmalen zum Einsatz. Alternativ werden andere, dem Fachmann bekannte Messsysteme, wie Faden-Messsysteme usw., eingesetzt.

Aufgrund regelmäßig vorhandener Ungenauigkeiten, z.B. Elastizitäten von Getrieben und Strukturelementen des Roboters sowie deren mangelnder Maßhaltigkeit, liefert die vorstehend genannte externe, hochgenaue Lagemessung des Flansches einen anderen Wert, als eine parallel durchgeführte interne Messung von Stellungswerten des Handhabungsgeräts über in dessen Gelenken integrierte Winkelgeber verbunden mit einer anschließenden Modellrechnung, einer sogenannten Vorwärtstransformation. Die so aus der ermittelten Lagedifferenz abgeleiteten Abweichungen jeweils an verschiedenen Orten des Arbeitsraumes werden anschließend dazu verwendet, ein sogenanntes "absolutgenaues Robotermodell" zu bestimmen, das wesentlich genauer als ein theoretisches "Standardmodell" des Roboters ist. Auf diese Weise wird die absolute Positioniergenauigkeit eines Mehrachs-Industrieroboters von einigen Millimetern bei Verwendung des Standardmodells auf weniger als einen Millimeter bei Verwendung eines absolutgenauen Robotermodells gesenkt.

Bei vorbekannten Verfahren und Vorrichtungen der eingangs genannten Art wird zum Bestimmen der vorstehend beschriebenen Absolutgenauigkeit wie folgt vorgegangen: Am Handflansch des Roboters wird eine Messplatte angeordnet, deren Pose - wie bereits erwähnt - von einem externen Messsystem erfasst wird. Eine zum Steuern des Handhabungsgeräts regelmäßig vorhandene Steuerungseinrichtung erhält jedoch über ein internes Messsystem des Roboters (Winkelmesser an den Roboterachsen) und anschließender Modellrechnungen (Vorwärtstransformation) dahingehende Informationen, dass sich anschließend die Messplatte in einer abweichenden Pose befindet. Anhand der genannten Abweichungen bestimmen die Steuerungseinrichtung oder ein externer Rechner anschlieβend durch Extrapolation, an welcher Stelle im Raum die Messplatte positioniert sein müsste, um unter Voraussetzung gleicher Abweichungen an dieser Stelle tatsächlich eine Pose einzunehmen, die der von dem externen Messsystem errechneten entspricht.

Bei dem vorstehend beschriebenen, bekannten Verfahren wird also das absolutgenaue Robotermodell durch eine Extrapolation von Achswinkeln bestimmt: Diejenige Achswinkel-Differenz, die im Betrieb aufgeschaltet werden muss, um eine gewünschte Pose im Raum einzunehmen, wird berechnet, nicht jedoch messtechnisch bestimmt.

Da nicht alle Punkte des Arbeitsraumes eines Roboters im Zuge der Vermessung angefahren werden können, wird der Arbeitsraum mit möglichst gleichmäßig verteilten Messpunkten abgedeckt. Werden im späteren Betrieb des Roboters Raumpunkte angefahren, die nicht vermessen wurden, so wird zwischen den vermessenen Raumpunkten interpoliert. Absolutgenaue Robotermodelle sind in der Lage, derartige Interpolationsvorschriften für den gesamten Arbeitsraum in eine Rechenvorschrift umzusetzen, die auf sämtliche, von einer Robotersteuerung befohlene Achswinkel einen Offset addiert, der dazu dient, die von der Robotersteuerung angefahrenen Bahnpunkte möglichst gut mit den tatsächlich gewünschten Bahnpunkten im Raum abzugleichen.

Absolutgenaue Roboter werden insbesondere dann eingesetzt, wenn Roboter-Steuerungsprogramme von Offline-Programmiersystemen erstellt und anschließend ohne aufwändiges Nachteachen bei einem realen Roboter eingesetzt werden sollen. Ein weiterer Einsatzbereich absolutgenauer Roboter liegt in der Kooperation mehrerer solcher Roboter, da beispielsweise beim gemeinsamen Transportieren eines Werkstücks durch zwei Roboter bereits kleinste Posenabweichungen schwerwiegende Konsequenzen, z.B. Verbiegen oder Bruch des Werkstücks, nach sich ziehen können.

Absolutgenaue Roboter sind heutzutage teurer als Standardroboter, da die Bestimmung der Modellparameter des absolutgenauen Robotermodells sehr zeitaufwändig ist. Des Weiteren ist es bislang auch bei einem absolutgenauen Roboter noch erforderlich, im konkreten Anwendungsfall Bahnpunkte nachzuteachen, der vorbekannte Verfahren und Vorrichtungen aufgrund der erwähnten Extrapolationsverfahren immer eine inhärente Restungenauigkeit enthalten. Dies hat in der Vergangenheit insbesondere dazu geführt, dass beim Austauschen eines Roboters eines Herstellers gegen ein Nachfolgemodell oder einen vergleichbaren Roboter eines anderen Herstellers regelmäßig alle Bahnpunkte einer konkreten Roboteranwendung neu geteacht werden mussten, weil qualitative Eigenschaften der beiden Roboter aufgrund unterschiedlichen Konstruktionen und der zugrundeliegenden Modelle zu unterschiedlich sind. Ein derartiger Austausch ist jedoch prinzipiell aus wirtschaftlichen Gründen, beispielsweise zur Leistungssteigerung in der Produktion, etwa durch kürzere Taktzeiten, erwünscht.

Der Erfindung liegt die Aufgabe zugrunde, ein Verfahren und eine Vorrichtung anzugeben, bei denen sich unter Vermeidung insbesondere der vorstehend aufgeführten Nachteile eine Positioniergenauigkeit von Handhabungsgeräten auf der Grundlage absolutgenauer Steuerungsmodelle für das Handhabungsgerät verbessern lässt, so dass insbesondere das Austauschen eines beliebigen Roboters in einer Roboterzelle durch einen anderen Roboter und eine verbesserte Kooperation von Robotern ermöglicht wird.

Die Aufgabe wird bei einem Verfahren der eingangs genannten Art dadurch gelöst, dass zum Erstellen eines absolutgenauen Modells weiterhin
- das Handhabungsgerät nach Maßgabe des externen Messsystems zur Minimierung der Abweichungen in eine im Wesentlichen der vorgegebenen Pose entsprechende Endpose verfahren wird; und
- anschließend interne Stellungswerte des Handhabungsgeräts in der Endpose für eine Parametrisierung des absolutgenauen Modells verwendet werden.

Die genannte Aufgabe wird weiterhin gelöst durch eine zum Bestimmen eines Steuerungsmodells für ein Handhabungsgerät, wie einen Mehrachs-Industrieroboter, mit einem externen Messsystem zum Bestimmen wenigstens eines Freiheitsgrads einer Pose des Handhabungsgeräts und mit Vergleichsmitteln zum Ermitteln von Abweichungen zwischen der bestimmten Pose und der vorgegebenen Pose, weiterhin aufweisend:
- erste Speichermittel zum Speichern einer vorgegebenen Pose des Handhabungsgeräts;
- Steuermittel zum Verfahren des Handhabungsgeräts nach Maßgabe des externen Messsystem in eine Endpose unter Minimierung der Abweichungen; und
- Rechenmittel zum Bestimmen von Parametern des Steuerungsmodells aus internen Stellungswerten des Handhabungsgeräts in der Endpose und Messwerten des externen Messsystems.

Erfindungsgemäß wird gegenüber dem vorbekannten Stande der Technik eine Steuerungseinrichtung des Handhabungsgeräts mit einem externen Messsystem verkoppelt, so dass die Steuerungseinrichtung aus den Messinformationen ableiten kann, wie sie das Handhabungsgerät bzw. eine am Handflansch eines Roboters angeordnete Messplatte bewegen muss, um diese an eine vordefinierte Stelle im Raum zu bringen. Ein entscheidender Unterschied des erfindungsgemäßen Verfahrens zu den bisher bekannten Verfahren besteht demnach darin, dass eine anzufahrende Position nicht in Roboterkoordinaten (internen Stellungswerten), sondern in Koordinaten des Messsystems (externe Messwerte) vorgegeben wird. Dagegen wird bei vorbekannten Verfahren das Handhabungsgerät an eine Stelle im Raum gefahren, wobei die Steuerungseinrichtung aufgrund interner Stellungswerte "glaubt", an der vorgegebenen Stelle im Raum zu sein. Anschließend wird mit Hilfe des externen Messsystems die tatsächliche Pose bestimmt. Die Differenz zwischen interner und externer Messung wird verwendet, um einen auf die geplanten Achswinkel zu addierenden Offset zu bestimmen, der die Abweichung lokal kompensiert. Demgegenüber liefert das vorgeschlagene, erfindungsgemäße Verfahren eine verbesserte Absolutgenauigkeit.

Die Messobjekte können eben oder beliebig 3-dimensional sein, weisen aber von einer Bildverarbeitung wahrnehmbare Kanten auf, die eine eindeutige Bestimmung der Lage der Messobjekte im Bild erlauben.

In Weiterbildung des erfindungsgemäßen Verfahrens ist vorgesehen, dass die Posenbestimmung durch das externe Messsystem optisch erfolgt. Vorrichtungstechnisch weist eine erfindungsgemäße Vorrichtung entsprechend ein externes Messsystem in Form eines optischen Messsystems auf. Hierbei können insbesondere an sich bekannte Messsysteme, wie Kamera- oder Laser-Tracking-Systeme, zum Einsatz kommen. Die Auswertung erfolgt dabei wertkontinuierlich.

In äußerst bevorzugter Weiterbildung der erfindungsgemäßen Vorrichtung ist vorgesehen, dass das externe Messsystem ein Stereo-Bildverarbeitungssystem ist. Auf diese Weise ist es mittels einer erfindungsgemäßen Vorrichtung möglich, sämtliche Freiheitsgrade einer Pose des Handhabungsgeräts in einem Messvorgang mit dem externen Messsystem zu bestimmen.

Zum Erstellen eines absolutgenauen Modells des Handhabungsgeräts wird im Rahmen der Erfindung äußerst vorzugsweise das Handhabungsgerät so lange verfahren, bis die Endpose und die vorgegebenen Posen im Rahmen vorgegebener Abweichungstoleranzen übereinstimmen. Dies beinhaltet, dass das externe Messsystem Teil eines Regelkreises ist, um die Abweichungen zwischen Ist- und Soll-Pose zu minimieren und den Roboter tatsächlich in eine gewünschte - vorgegebene - Pose zu bewegen. Der Roboter wird in eine von einem externen Messsystem vorgegebene Pose geregelt. Dabei werden präzise, wertkontinuierliche Messungen des externen Messsystems durchgeführt und verwendet, um die Regelung durchzuführen. Die Regelung erfolgt mit dem Ziel, einen Fehler zwischen Soll- und Ist-Pose zu minimieren, wobei die Regelung im bevorzugten Fall bildbasiert erfolgt.

Idealerweise handelt es sich bei den für die erfindungsgemäßen Posenbestimmungen angefahrenen Posen um diejenigen Posen, die das Handhabungsgerät während seines Betriebes regelmäßig anfahren muss. Die Vermessung des gesamten Arbeitsbereiches ist jedoch weder wirtschaftlich sinnvoll, noch praktikabel. Andererseits ist jedoch ein einzelnes, absolutgenaues Modell für den gesamten Arbeitsbereich eines Handhabungsgeräts nicht ausreichend. Erfindungsgemäß wird daher weiterhin bei einem Verfahren der eingangs genannten Art zur Lösung der vorstehend formulierten Aufgabe vorgeschlagen, dass für eine Mehrzahl von Arbeitsraum-Bereichen des Handhabungsgeräts jeweils zugeordnete absolutgenaue Modelle erstellt werden.

Der Arbeitsraum des Roboters wird zur Erhöhung der Genauigkeit so in mehrere Arbeitsräume aufgeteilt, für die unabhängig voneinander ein absolutgenaues Modell erstellt wird, das in dem ihm zugehörigen Teilarbeitsraum dann natürlich auch besser sein sollte als ein Modell für den gesamten Arbeitsraum.

Im Zuge einer solchen Ausgestaltung des erfindungsgemäßen Verfahrens wird nur derjenige Bereich bzw. werden nur diejenigen Bereiche innerhalb des erreichbaren Arbeitsraums des Handhabungsgeräts vermessen, die im Betrieb auch tatsächlich angefahren werden. Für jeden dieser Bereiche wird erfindungsgemäß ein zugeordnetes, absolutgenaues Modell verwaltet, zwischen denen bei Bedarf umgeschaltet werden kann. Vorzugsweise wird dabei im Betrieb des Handhabungsgeräts in Abhängigkeit von einer Pose desselben zwischen den mehreren, absolutgenauen Modellen ausgewählt. Diese Auswahl kann vorzugsweise auch bei der Kalibrierung erfolgen.

In Weiterbildung des erfindungsgemäßen Verfahrens ist vorgesehen, dass ermittelte Parameter des absolutgenauen Modells bzw. der absolutgenauen Modelle in einer Steuerungseinrichtung des Handhabungsgeräts gespeichert und bei Bedarf steuerungstechnisch verwendet werden. In der Regel werden Parameter absolutgenauer Robotermodelle nicht-flüchtig in einer Steuerungseinrichtung des Handhabungsgeräts hinterlegt. Dabei ist es für den Betreiber einer Anlage normalerweise nicht möglich, diese Parameter zu ermitteln, da das zugrundeliegende, absolutgenaue Robotermodell nicht bekannt ist.

Um den Betreibern einer Anlage die Parametrierung dieses Modells dennoch zu ermöglichen, ist erfindungsgemäß vorgesehen, eine einfache Schnittstelle zur Robotersteuerung und einen Algorithmus zur Berechnung der Modellparameter bereitzustellen. Über diese Schnittstelle wird dem Algorithmus (der auch auf einem externen Rechner laufen kann) eine Punkteliste zur Verfügung gestellt, die mindestens so viele Punkte (Informationen) enthalten muss, dass sie einem bekannten Optimierungsverfahren ermöglicht, die Anzahl der unbekannten Parameter zu bestimmen. Die Punktliste besteht zum einen aus den internen Stellungswerten des Handhabungsgeräts und zum anderen aus diesen Werten zugeordneten Messwerten einer externen Posenbestimmung des Roboters.

Nach einer weiteren Ausgestaltung des erfindungsgemäßen Verfahrens ist es auch möglich, dass die internen Stellungswerte von dem Speichern in eine Pose des Handhabungsgeräts transformiert werden. Ebenso ist es möglich, dass die extern bestimmten Posenwerte in Achsstellungen umgerechnet werden (Rückwärtstransformation).

Entsprechende Weiterbildungen der erfindungsgemäßen Vorrichtung sehen vor, dass diese zweite Speichermittel zum Speichern der externen Messwerte und der internen Stellungswerte aufweist. Weiterhin können Transformierungsmittel zum Transformieren der internen Stellungswerte eine Pose des Handhabungsgeräts vorhanden sein.

Weitere Vorteile und Eigenschaften der Erfindung ergeben sich aus der nachfolgenden Beschreibung eines Ausführungsbeispiels anhand der Zeichnung. Es zeigt:
- Fig. 1a: schematisch ein Handhabungsgerät in Form eines Mehrachs-Industrieroboters und ein externes Messsystem;
- Fig. 1b: ein Blockschaltbild einer erfindungsgemäßen Vorrichtung;
- Fig. 2: schematisch eine an einem Handflansch des Roboters angeordnete Messplatte;
- Fig. 3: schematisch eine im Zuge des erfindungsgemäßen Verfahrens durchgeführte Abweichungs-Minimierung; und
- Fig. 4: einen beispielhaften Verfahrensablauf zum Bestimmen der Parameter eines absolutgenauen Roboters nach der Erfindung.

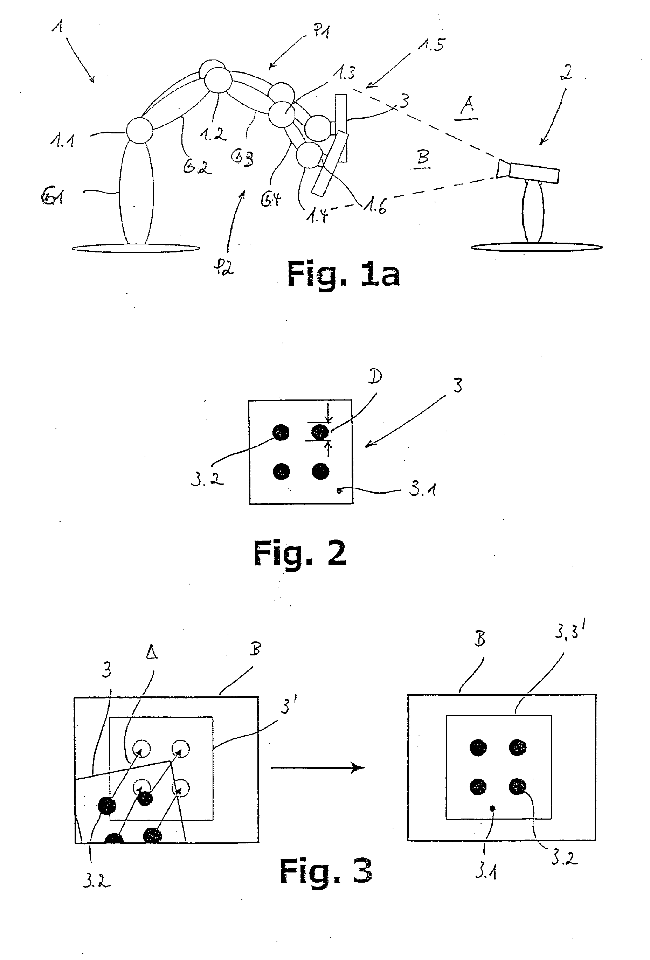

Die Fig. 1a zeigt ein Handhabungsgerät in Form eines Mehrachs-Industrieroboters 1 sowie ein mit diesem in dessen Arbeitsraum A zusammenwirkendes, externes Messsystem 2, hier in Form eines optischen Kamerasystems.

Der Roboter 1 besitzt eine Anzahl von - in der gewählten Darstellung nur schematisch gezeigten - Robotergliedern G1-G4, die über entsprechende Gelenke 1.1 - 1.4 verbunden sind. An einem distalen Ende 1.5 eines aus den Gliedern G1-G4 gebildeten Arms des Roboters 1 ist ein Handflansch 1.6 angeordnet, an dem eine Messplatte 3 (vgl. Fig. 2) befestigt ist. Wie weiter unten in der Fig. 1b dargestellt, weist der Roboter 1 außerdem ein internes Messsystem 1.7 für Stellungswerte des Roboters 1 auf, beispielsweise in Form von in den Roboter-Gelenken 1.1 - 1.4 enthaltenen Winkelmessern.

Der Roboter 1 ist in Fig. 1a in zwei Posen P1, P2 dargestellt: Die Pose P1 (durchgezogene Linie in Fig. 1a) bezeichnet eine tatsächliche Pose, die erfindungsgemäß mit Hilfe des externen Messsystems 2 bestimmbar ist. Die Pose P2 (punktierte Linie in Fig. 1a) bezeichnet diejenige Pose, in der der Roboter 1 aufgrund des internen Messsystems, wie in seinen Gelenken 1.1 - 1.4 vorhandener Winkelmesser, zu sein glaubt.

Das externe Messsystem 2 weist zum Vermessen der Posen des Roboters 1 einen Messbereich B auf, der in der Fig. 1a durch seine Bereichsgrenzen (gestrichelte Linien) definiert ist. Innerhalb dieses Bereichs B kann das externe Messsystem die Pose der Messplatte 3 bestimmen, woraus sich die Pose P1 des Roboters mit Hilfe bekannter Verfahren bestimmen lässt.

Die Fig. 1b zeigt anhand eines Blockschaltbild das erfindungsgemäße Zusammenwirken des Roboters 1 bzw. einer mit ihm verbundenen Steuerungseinrichtung 4 und des externen Messsystems 2 (vgl. Fig. 1a). Die Steuerungseinrichtung 4 ist mit dem Roboter 1 insbesondere zur Bewegungssteuerung desselben durch Steuersignale S verbunden. Weiterhin besteht eine Verbindung von der Steuerungseinrichtung 4 zu dem externen Messsystem 2, über die insbesondere Posen-Messwerte M von dem externen Messsystem 2 an die Steuerungseinrichtung 4 aber umgekehrt auch Steuerbefehle zum Durchführen eines Messvorgangs übermittelt werden. Statt der Robotersteuerung kann prinzipiell auch ein weiterer Rechner (Masterrechner) Messwerte vom Messsystem sammeln und die Robotersteuerung kommandieren.

Die Steuerungseinrichtung 4 umfasst gemäß der Fig. 1b zumindest Speichermittel 4.1, die nach dem gezeigten Ausführungsbeispiel funktionell, jedoch nicht notwendigerweise hardwaretechnisch in erste 4.1 und zweite Speichermittel 4.1b unterteilt sind (strichpunktierte Linie in Fig. 1b). Bei den Speichermitteln 4.1 kann es sich insbesondere um einen nicht-flüchtigen Massenspeicher handeln.

Weiterhin beinhaltet die Steuerungseinrichtung 4 Vergleichsmittel 4.2 und Rechenmittel 4.3, die nach dem gezeigten Ausführungsbeispiel als hardwaretechnische Einheit in Form eines Mikroprozessors 4.4 vorliegen (punktierte Linie in Fig. 1b). Außerdem dargestellt sind Steuermittel 4.5, wobei auch Letztere mit den Vergleichsmitteln 4.2 und den Rechenmitteln 4.3 als Einheit ausgebildet sein können (nicht gezeigt).

Die Funktionen der einzelnen Bestandteile der Steuerungseinrichtung 4 im Rahmen der vorliegenden Erfindung werden weiter unten noch detailliert erläutert.

Die Fig. 2 zeigt schematisch eine Vorderansicht der Messplatte 3 aus Fig. 1a, etwa aus der Blickrichtung des externen Messsystems 2. Die Messplatte 3 ist beim gezeigten Ausführungsbeispiel quadratisch ausgebildet und weist auf ihrer Vorderseite 3.1 eine Anzahl von kreisförmigen Markierungen 3.2 auf, die speziell wie die Augen eines Würfels zur Darstellung der Zahl Vier im Quadrat angeordnet sind. Das Verfahren funktioniert unabhängig von der Art der Anordnung der Punkte, die gewählt sind, weil sie dann mittels Bildverarbeitung leicht erkannt werden können. Die Markierungen 3.2 besitzen alle denselben Durchmesser D. Auf diese Weise kann über eine durch das externe Messsystem 2 (Fig. 1a) ermittelte absolute Lage der Messplatte 3 aufgrund absoluter Positionen der Markierungen 3.2 bzw. scheinbarer Veränderungen des Durchmessers D von Markierung zu Markierung eine Pose P1 des Roboters 1 bestimmt und erfindungsgemäß zur Verbesserung der Positioniergenauigkeit bzw. zum Erstellen eines absolutgenauen Modells des Roboters 1 verwendet werden.

Dies ist in der Fig. 3 schematisch dargestellt: Die Rechtecke in Fig. 3 bezeichnen jeweils den Messbereich B des externen Messsystems 2 (vgl. Fig. 1a). Dabei ist im linken und im rechten Teil der Fig. 3 jeweils ein durch die Kamera des externen Messsystems 2 aufgenommenes Bild dargestellt. Im linken Teil der Fig. 3 ist neben der (realen) Messplatte 3 noch eine weitere, virtuelle Messplatte 3' (punktiert) eingezeichnet, die eine vorgegebene Pose des Roboters 1 symbolisiert, d.h. eine Pose, in die der Roboter 1 bzw. die Messplatte 3 nach Maßgabe der Steuermittel 4.5 in der Steuerungseinrichtung 4 (Fig. 1b) bewegt werden soll. Die Pfeile im linken Teil der Fig. 3 symbolisieren Abweichungen Δ der tatsächlichen Pose (Messplatte 3) von der vorgegebenen Pose (Messplatte 3'), wie sie beim gezeigten Ausführungsbeispiel durch die Vergleichsmittel 4.2 der Steuerungseinrichtung 4 ermittelt werden, nachdem das externe Messsystem 2 seine Messdaten M an die Steuerungseinrichtung 4 übertragen hat, wie in der Fig. 1b dargestellt. Die Markierungen 3.2 auf der Messplatte 3 sind im linken Teil der Fig. 3 insbesondere mit unterschiedlichen Durchmessern dargestellt, so dass durch eine geeignete Bildverarbeitung der Messdaten M aus dem Messbereich B des externen Messsystems 2 in den hierzu softwaretechnisch eingerichteten Vergleichsmitteln 4.2 der Steuerungseinrichtung 4 tatsächlich Abweichungen in allen Freiheitsgraden (hier: sechs) des Roboters 1 bestimmbar sind. Die so bestimmten Abweichungen Δ werden anschließend durch die Steuermittel 4.5 der Steuerungseinrichtung 4 dazu verwendet, den Roboter 1 über geeignete Steuersignale S bis in eine Endpose zu verfahren, in der die reale Messplatte 3 und die virtuelle Messplatte 3' bzw. deren Bilder bis auf eine durch die Steuerungseinrichtung 4 vorgegebene Abweichungstoleranz zur Deckung kommen, d.h. der Roboter 1 befindet sich bis auf eine tolerierte Abweichung in der vorgegebenen, beim gezeigten Ausführungsbeispiel speziell in den ersten Speichermitteln 4.1a der Steuerungseinrichtung 4 gespeicherten vorgegebenen Pose des Roboters 1. Dies ist im rechten Teil der Fig. 3 dargestellt, wobei die verbleibenden Abweichungen nicht erkennbar sind.

Nachdem erfindungsgemäß eine Endpose des Roboters durch Minimieren der Abweichungen Δ erreicht ist, bestimmen die in geeigneter Weise softwaretechnisch eingerichteten Rechenmittel 4.3 der Steuerungseinrichtung 4 Parameter eines absolutgenauen Steuerungsmodells des Roboters 1 aus den Messwerten M des externen Messsystems 2 und aus internen Stellungswerten des Roboters 1 in der Endpose, die in der Steuerungseinrichtung 4 durch das interne Messsystem 1.7 des Roboters 1 zur Verfügung gestellt werden (Fig. 1b). Weiterhin werden beim gezeigten Ausführungsbeispiel die externen Messwerte M des externen Messsystems 2 sowie die internen Stellungswerte 1.7 des Roboters 1 in dem zweiten Speichermittel 4.1b der Steuerungseinrichtung 4 in Form von Punktlisten (s.u.) dauerhaft abgelegt. Dabei werden die internen Stellungswerte des Roboters 1 vorzugsweise durch die Rechenmittel 4.3, die demgemäß als Transformierungsmittel fungieren, in eine Pose des Roboters 1 vor dem Speichern umgewandelt. Dies geschieht in dem Fachmann bekannter Weise durch eine sogenannte Vorwärtstransformation.

Die Rechenmittel 4.3 bestimmen - wie bereits erwähnt - anhand der internen Stellungswerte des Roboters in der Endpose eine Parametrisierung eines absolutgenauen Robotermodells. Dies kann erfindungsgemäß für verschiedene Bereiche des Arbeitsraums A des Roboters 1 mit jeweils entsprechenden Messbereichen B des externen Sensorsystems 2 getrennt geschehen. Die so bestimmten absolutgenauen Robotermodelle können erfindungsgemäß nicht-flüchtig in den Speichermitteln 4.1 der Steuerungseinrichtung abgelegt und bei Bedarf je nach aktuellem Arbeitsbereich des Roboters 1 abgerufen und steuerungstechnisch zum Steuern des Roboters 1 eingesetzt werden. Zusätzlich oder alternativ ist es jedoch auch möglich, während der Vermessungsvorgänge generierte Punktlisten, nämlich eine Messpunkt-Liste für interne Stellungswerte des Roboters und für externe Posenbestimmungen durch das externe Messsystem, als solche, d.h. unverarbeitet nicht-flüchtig in den Speichermitteln 4.1 abzulegen, so dass die Steuerungseinrichtung 4 beim Hochfahren, d.h. während einer Initialisierungsphase der Steuerungseinrichtung 4 die entsprechenden Modellparameter aktuell aus den Punktlisten bestimmt. Dies ist leicht möglich, sofern ein Bezug der Messwerte zu einem in der Steuerungseinrichtung 4 vorliegenden Punkt, d.h. einem programmierten Bahnpunkt des Roboters 1 hergestellt werden kann, beispielsweise durch Abspeichern eines entsprechenden Datums zusammen mit den Punktlisten in den Speichermitteln 4.1.

In den Punktlisten werden von der Steuerung angefahrenen Gelenkwinkel bzw. die dazu gehörigen Posen einer Messplatte in einer ersten Spalte gespeichert wie die Robotersteuerung sie sieht (z.B. in Form von X, Y, Z, A, B-C-Werten des Roboterflansches oder Achswinkeln A1, A2, A3, A4, A5, A6). In einer zweiten Spalte werden Messwerte eines externen Messsystems als die tatsächlichen "wahren" Posen, die z.B. mit Hilfe eines externen Messsystems, wie einer Messplatte am Flansch bestimmt werden, die ebenfalls in Form von X, Y, Z, A, B, C-Werten (Pose der Messplatte im Raum) oder vom Modellrechnungsalgorithmus akzeptierten Werten (z.B. Länge bei einer Art Fadenmesssystem) oder bereits auf die Flansch-Pose umgerechneten Werten abgespeichert werden, wenn letzteres möglich ist, abgelegt. In jeder Zeile stehen dann sowohl von der Robotersteuerung gemessene Messwerte als auch diesen zugeordnete externe Messwerte. Die externen Messwerte müssen dabei keineswegs bereits den Roboterposen entsprechen, sondern können in einem Format vorliegen dass das Messsystem hergibt, z.B. Länge und Winkel eines Fadens bei einem Fadenmesssystem. Die Robotersteuerung wird sich dann beim Einlesen dieser Messpunkteliste aus der zweiten Spalte selbst die benötigten Posen berechnen, um einen Abgleich der internen und externen Messungen vornehmen zu können. Es kann auch eine Messgerätesteuerung dazwischengeschaltet sein, die diesen Umrechnungsvorgang vornimmt. Aber prinzipiell soll der Betreiber eines Roboters in die Lage versetzt werden, mit einem ihm genehmen Messsystem Punktlisten zu generieren, die eine Robotersteuerung in die Lage versetzen, die Parameter des absolutgenauen Robotermodells zu bestimmen. Im Allgemeinen ist die gesamte Punktliste als Eingangsparameter für den Modellrechnungsalgorithmus und es wird eine Optimierungsrechnung über alle Messwerte durchgeführt.

Abgespeichert werden erfindungsgemäß also zum einen die von der Steuerungseinrichtung 4 während des Vermessungsvorgangs angefahrenen Punkte im Raum, jeweils dargestellt durch Position und Orientierung des Handflansches 1.6 des Roboters 1 bzw. der Messplatte 3, wie sie sich aus den internen Stellungswerten des Roboters 1 und ggf. entsprechendem Modellwissen (Vorwärtstransformation) ergeben; andererseits die von dem externen Messsystem 2 ermittelten, tatsächlich angefahrenen Punkte im Raum, d.h. die wahren Positionen und Orientierungen des Handflansches 1.6 bzw. der Messplatte 3. Für die genannten Messvorgänge eignen sich erfindungsgemäß verschiedene Messsysteme, solange sie eine derartige Punktliste liefern. Bestenfalls ergeben sich pro Messvorgang alle sechs Freiheitsgrade im Raum, beispielsweise wenn als externes Messsystem ein Stereo-Bildverarbeitungssystem zum Einsatz kommt. Im ungünstigsten Fall ergibt sich pro Messung nur ein einzelner Freiheitsgrad, beispielsweise wenn ein Faden-Messsystem zum Einsatz kommt, das lediglich die Länge eines Fadens zwischen einem Fixpunkt und dem Flansch 1.6 bzw. der Messplatte 3 ermittelt. Erfindungsgemäß müssen dann entsprechend mehr Messungen erfolgen, um sämtliche Parameter des absolutgenauen Robotermodells bestimmen zu können.

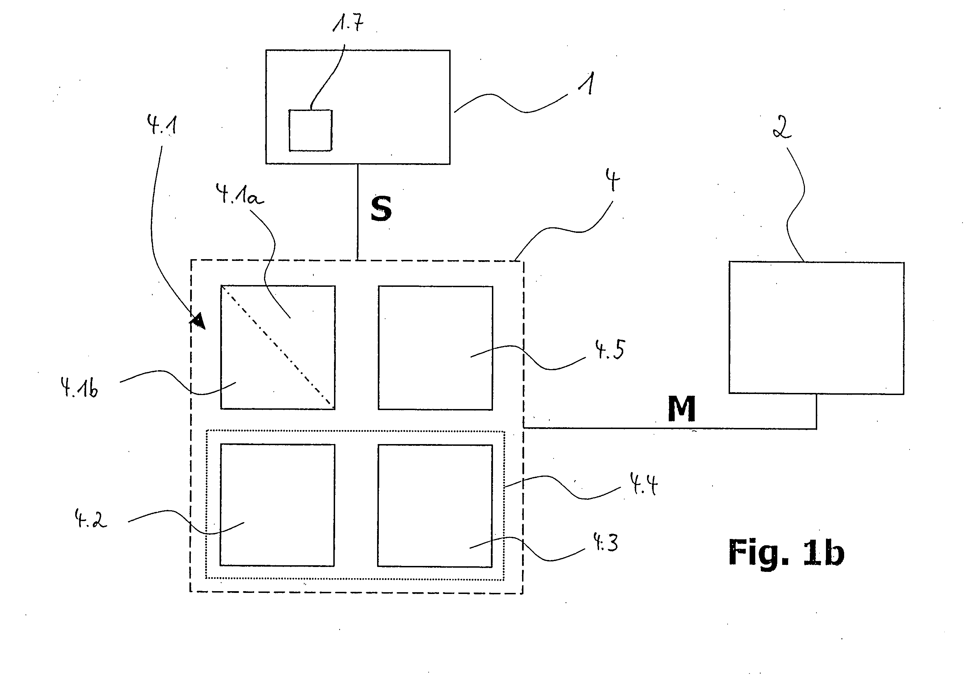

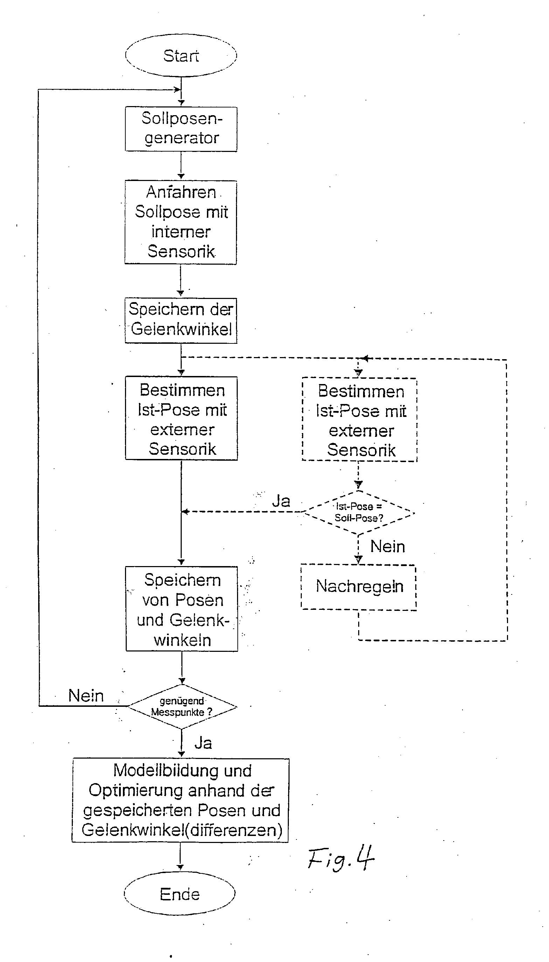

Die Fig. 4 zeigt einen beispielhaften Verfahrensablauf zum Bestimmen der Parameter eines absolutgenauen Roboters und der Erfindung mit Hilfe eines externen Messsystems, das in der Lage ist, die Pose des Roboters in allen Freiheitsgraden zu bestimmen (z.B. mit Hilfe eines optischen Systems).

Durchgezogene Linien: bezeichnen einen als bekannt vorausgesetzten Verfahrensablauf, gestrichelte Linien: den Verfahrensablauf, in dem verschiedene Soll-Posen im Laufe des Modellparameter-Findungsprozesses mit einer bestimmten tolerierbaren Genauigkeit angefahren werden. Die gewünschte Genauigkeit wird mit Hilfe einer Regelung auf vorab generierte Soll-Posen erreicht. Für jede anzufahrende Soll-Pose wird über ein externes Messsystem zur Posenermittlung die aktuelle, wahre Pose bestimmt. Diese wird so lange angepasst (nachgeregelt), bis sich der Roboter an der gewünschten Pose befindet. Die Abweichung der Gelenkwinkel an der mittels interner Sensorik gemessenen und zunächst eingestellten (=vermuteten) Pose gegenüber der mittels externer Sensorik gemessenen und eingestellten (=wahren) Pose dient zur Parametrierung des absolutgenauen Robotermodells.

Wenn sich eine wahre Ist-Pose (6 DOF) nicht direkt aus einem einzigen Soll-Positionierungsvorgang und anschließendem Messvorgang bestimmen lässt, können mehrere Positionierungsvorgänge und Messvorgänge (z.B. mit einem Fadenmesssystem) erfolgen, bevor in einem abschließenden Modellierungs- und Optimierungsprozess mit Hilfe sämtlicher aufgezeichneter Messgrößen die Parameter des absolutgenauen Robotermodells bestimmt werden.

Aber auch mit Messsystemen, die nicht die Pose in einem Messvorgang bestimmen können, kann das "Servoing"-Verfahren zum Einsatz kommen. In diesem Fall würde dann nicht die Pose in 6D nachgeregelt, sondern die relevanten Messgrößen (z.B. Länge und Winkel des Fadens), und zwar so lange, bis sie mit der o.g. tolerierbaren Genauigkeit den vom Posengenerator ebenfalls generierten "Soll-Messgrößen" entsprechen.

### Bezugszeichenliste

- 1: Roboter
- 1.1-1.4: Gelenk
- 1.5: distales Ende
- 1.6: Handflansch
- 1.7: internes Messsystem
- 2: externes Messsystem
- 3, 3': Messplatte
- 3.1: Vorderseite
- 3.2: Markierung
- 4: Steuerungseinrichtung
- 4.1: Speichermittel
- 4.1a: erste Speichermittel
- 4.1b: zweite Speichermittel
- 4.2: Vergleichsmittel
- 4.3: Rechenmittel
- 4.4: Prozessor
- 4.5: Steuermittel
- A: Arbeitsraum
- G1-G4: Roboterglied
- B: Messbereich
- D: Durchmesser
- M: Messdaten
- P1, P2: Pose
- S: Steuersignale
- Δ: Abweichung

## Patentansprüche

1. Verfahren zum Verbessern der Positioniergenauigkeit eines Handhabungsgeräts, wie eines Mehrachs-Industrieroboters, wobei eine Pose des Handhabungsgeräts durch ein externes Messsystem bestimmt wird und Abweichungen der bestimmten Pose von einer vorgegebenen Pose ermittelt werden, **dadurch gekennzeichnet, dass** zum Erstellen wenigstens eines absolutgenauen Modells des Handhabungsgeräts zur Steuerung desselben
- das Handhabungsgerät nach Maßgabe des externen Messsystems zur Minimierung der Abweichungen in eine im Wesentlichen der vorgegebenen Pose entsprechende Endpose verfahren wird; und
- anschließend interne Stellungswerte des Handhabungsgeräts in der Endpose für eine Parametrisierung des absolutgenauen Modells verwendet werden.

2. Verfahren nach Anspruch 1, **dadurch gekennzeichnet, dass** das Handhabungsgerät so lange verfahren wird, bis die Endpose und die vorgegebene Pose im Rahmen vorgegebener Abweichungstoleranzen überstimmen.

3. Verfahren zum Verbessern der Positioniergenauigkeit eines Handhabungsgeräts, wie eines Mehrachs-Industrieroboters, durch Erstellung wenigstens eines absolutgenauen Modells des Handhabungsgeräts zur Steuerung desselben, insbesondere nach einem der Ansprüche 1 bis 2, **dadurch gekennzeichnet, dass** für eine Mehrzahl von Arbeitsraum-Bereichen des Handhabungsgeräts jeweils zugeordnete, absolutgenaue Modelle erstellt werden.

4. Verfahren nach Anspruch 3, **dadurch gekennzeichnet, dass** bei Betrieb des Handhabungsgeräts in Abhängigkeit von einer Pose desselben zwischen den mehreren, absolutgenauen Modellen ausgewählt wird.

5. Verfahren nach einem der Ansprüche 1 bis 4, **dadurch gekennzeichnet, dass** ermittelte Parameter des absolutgenauen Modells bzw. der absolutgenauen Modelle in einer Steuerungseinrichtung des Handhabungsgeräts gespeichert und bei Bedarf steuerungstechnisch verwendet werden.

6. Verfahren nach einem der Ansprüche 1 bis 4, **dadurch gekennzeichnet, dass** während des Messvorgangs der Modellerstellung generierte Messpunkt-Listen für interne Stellungswerte des Handhabungsgeräts und für externe Posenbestimmungen in einer Steuerungseinrichtung des Handhabungsgeräts gespeichert und bei Bedarf Parameter des absolutgenauen Modells bzw. der absolutgenauen Modelle aus den Messpunkt-Listen bestimmt werden.

7. Verfahren nach Anspruch 6, **dadurch gekennzeichnet, dass** extern bestimmte Posen in interne Stellungswerte transformiert werden.

8. Verfahren nach Anspruch 6, **dadurch gekennzeichnet, dass** die Modellparameter-Bestimmung mit Hilfe eines Optimierungsverfahrens erfolgt, das die Messwerte mehrerer gemessenen Posen bzw. Stellungswerte berücksichtigt.

9. Verfahren nach einem der Ansprüche 6 bis 8, **dadurch gekennzeichnet, dass** die internen Stellungswerte vor dem Speichern in eine Pose des Handhabungsgeräts transformiert werden.

10. Verfahren nach einem der Ansprüche 1 bis 9, **dadurch gekennzeichnet, dass** die Posenbestimmung durch das externe Messsystem optisch erfolgt.

11. Vorrichtung zum Bestimmen eines Steuerungsmodells für ein Handhabungsgerät, wie einen Mehrachs-Industrieroboter (1), mit einem externen Messsystem (2) zum Bestimmen wenigstens eines Freiheitsgrads einer Pose (P1) des Handhabungsgeräts (1) und mit Vergleichsmitteln (4.2) zum Ermitteln von Abweichungen (Δ) zwischen der bestimmten Pose (P1) und der vorgegebenen Pose, weiterhin aufweisend:
- erste Speichermittel (4.1a) zum Speichern einer vorgegebenen Pose des Handhabungsgeräts (1);
- Steuermittel (4.5) zum Verfahren des Handhabungsgeräts (1) nach Maßgabe des externen Messsystems (2) in eine Endpose unter Minimierung der Abweichungen (Δ); und
- Rechenmittel (4.3) zum Bestimmen von Parametern des Steuerungsmodells aus internen Stellungswerten des Handhabungsgeräts (1) in der Endpose und Messwerten des externen Messsystems (2).

12. Vorrichtung nach Anspruch 11, **gekennzeichnet durch** zweite Speichermittel (4.1b) zum Speichern der externen Messwerte und der internen Stellungswerte.

13. Vorrichtung nach Anspruch 11 oder 12, **gekennzeichnet durch** Transformierungsmittel (4.3) zum Transformieren der internen Stellungswerte in eine Pose des Handhabungsgeräts (1) und umgekehrt.

14. Vorrichtung nach einem der Ansprüche 11 bis 13, **dadurch gekennzeichnet, dass** das externe Messsystem (2) zum Bestimmen sämtlicher Freiheitsgrade einer Pose (P1) des Handhabungsgeräts (1) in einem Messvorgang ausgebildet ist.

15. Vorrichtung nach einem der Ansprüche 11 bis 14, **dadurch gekennzeichnet, dass** das externe Messsystem (2) ein optisches Messsystem ist.

16. Vorrichtung nach einem der Ansprüche 11 bis 15, **dadurch gekennzeichnet, dass** das externe Messsystem (2) ein Stereo-Bildverarbeitungssystem ist.
